# EUROPEAN PATENT APPLICATION

(11) **EP 4 467 262 A1**
(43) Date of publication of application: **27.11.2024**
(21) Application number: 23743293.5
(22) Date of filing: 18.01.2023
(51) Int. Cl.: B22F 9/00, B22F 9/24, C09D 11/52, B22F 1/00, B22F 1/107

(54) **METALLIC INK, METHOD FOR PRODUCING METALLIC INK, METHOD FOR PRODUCING METALLIC LAYER, AND METALLIC LAYER**

(30) Priority: 19.01.2022 JP 2022006776
(71) Applicant: Mitsubishi Materials Corporation, Tokyo 100-8117 (JP)
(72) Inventor: UESUGI, Ryuji, Naka-shi, Ibaraki 311-0102 (JP); YAMAGUCHI, Tomohiko, Naka-shi, Ibaraki 311-0102 (JP); EBISAWA, Riku, Naka-shi, Ibaraki 311-0102 (JP)
(74) Representative: Gille Hrabal Partnerschaftsgesellschaft mbB Patentanwälte
(86) International application number: PCT/JP2023/001406
(87) International publication number: WO 2023/140300

(57) **Abstract**

The metal ink enables appropriate storage for a long period of time while suppressing aggregation of metal particles. A metal ink (10) includes: a metal particle (12); a solvent (16); an organic solvent (18) having a boiling point of 150°C or higher at atmospheric pressure and being miscible with water; and a polyhydric alcohol (14) having two or more OH groups and being soluble in water and ethanol.

## Description

### Field

The present invention relates to a metal ink, a method for producing a metal ink, a method for producing a metal layer, and a metal layer.

### Background

As an example of forming a metal layer on a member, Patent Literature 1 describes forming a solder layer on a member. For example, Patent Literature 2 describes forming a metal layer using silver paste. Silver paste can be sintered under relatively low temperature conditions, and the melting point of a bonding layer formed after sintering is equivalent to that of silver. The metal layer formed of the sintered silver paste therefore has excellent heat resistance and can be used stably even in high-temperature environments and large-current applications. On the other hand, copper paste is sometimes used from the viewpoint of material cost, for example, as disclosed in Patent Literature 3.

In forming a metal layer in this way, a metal ink in which metal particles are dispersed in a liquid may be used instead of a metal paste such as copper paste. The metal ink may be advantageous from a manufacturing standpoint because the metal ink can be ejected, for example, from nozzles.

### Citation List

### Patent Literature

Patent Literature 1: Japanese Patent Application Laid-open No. 2004-172378
Patent Literature 2: Japanese Patent No. 6531547
Patent Literature 3: Japanese Patent Application Laid-open No. 2019-67515

### Summary

### Technical Problem

Such a metal ink may cause deterioration in the characteristics of the product, such as reduction in the denseness of the metal layer, due to aggregation of the metal particles. Furthermore, it is also required to appropriately store the metal ink for a long period of time. Therefore, it is required to enable appropriate storage for a long period of time while suppressing aggregation of metal particles.

The present invention has been made in view of the above, and an object thereof is to provide a metal ink that can be appropriately stored for a long period of time while suppressing aggregation of metal particles, a method for producing the metal ink, and a method for producing the metal layer.

### Solution to Problem

To solve the problem above, a metal ink of the present disclosure comprises: a metal particle; a solvent; an organic solvent having a boiling point of 150°C or higher at atmospheric pressure and being miscible with water; and a polyhydric alcohol having two or more OH groups and being soluble in water and ethanol.

It is preferable that the polyhydric alcohol is contained in a mass ratio of 0.01% or more and 20.0% or less with respect to a total amount of the metal ink.

It is preferable that the metal particle is contained in a mass ratio of 1.0% or more and 50.0% or less with respect to a total amount of the metal ink.

It is preferable that the organic solvent is contained in a mass ratio of 0.01% or more and 30.0% or less with respect to a total amount of the metal ink.

It is preferable that the organic solvent includes at least one of a glycol ether and an aprotic polar solvent.

It is preferable that the polyhydric alcohol has a melting point of 30°C or higher.

It is preferable that the solvent includes water.

It is preferable that the solvent includes ethanol.

It is preferable that the solvent includes a high boiling point solvent that has one or more OH groups, has a boiling point of 150°C or higher, and is a liquid hardly soluble or insoluble in water.

It is preferable that the metal particle is at least one of copper and silver.

It is preferable that the metal particle is copper or silver, the solvent includes water, the organic solvent includes at least one of a glycol ether and an aprotic polar solvent, and the polyhydric alcohol includes at least one polyhydric alcohol that has two or more OH groups, is soluble in water and ethanol, and has a melting point of 30°C or higher.

To solve the problem above a method for producing a metal ink of the present disclosure comprises mixing a metal particle, a solvent, an organic solvent having a boiling point of 150°C or higher at atmospheric pressure and being miscible with water, and a polyhydric alcohol having two or more OH groups and being soluble in water and ethanol to produce a metal ink containing the metal particle, the solvent, and the polyhydric alcohol.

It is preferable that the method comprises mixing the metal particle, water as the solvent, the polyhydric alcohol, and the organic solvent to produce a first metal ink which is a metal ink containing the metal particle, water, the organic solvent, and the polyhydric alcohol.

It is preferable that the method comprises mixing the first metal ink, and ethanol as the solvent to produce a second metal ink which is a metal ink containing the metal particle, water, the ethanol, the polyhydric alcohol, and the organic solvent.

It is preferable that the method comprises mixing the second metal ink, and a high boiling point solvent, the high boiling point solvent as the solvent has one or more OH groups, has a boiling point of 150°C or higher, and is a liquid hardly soluble or insoluble in water to produce a third metal ink which is a metal ink containing the metal particle, water, the ethanol, the high boiling point solvent, the polyhydric alcohol, and the organic solvent.

A method for producing a metal layer of the present disclosure comprises heating the metal ink to form a metal layer.

A metal layer of the present disclosure is formed by using the metal ink.

### Advantageous Effects of Invention

The present invention enables appropriate storage for a long period of time while suppressing aggregation of metal particles.

### Brief Description of Drawings

FIG. 1 is a schematic diagram of a metal ink according to the embodiment.
FIG. 2 is a flowchart for outlining a method for producing a metal ink according to the embodiment.
FIG. 3A is a table showing the content of the components of a metal ink in each example and evaluation results thereof.
FIG. 3B is a table showing the content of the components of a metal ink in each example and evaluation results thereof.
FIG. 3C is a table showing the content of the components of a metal ink in each example and evaluation results thereof.
FIG. 3D is a table showing the content of the components of a metal ink in each example and evaluation results thereof.
FIG. 3E is a table showing the content of the components of a metal ink in each example and evaluation results thereof.
FIG. 3F is a table showing the content of the components of a metal ink in each example and evaluation results thereof.
FIG. 3G is a table showing the content of the components of a metal ink in each example and evaluation results thereof.
FIG. 3H is a table showing the content of the components of a metal ink in each example and evaluation results thereof.
FIG. 3I is a table showing the content of the components of a metal ink in each example and evaluation results thereof.

### Description of Embodiments

The present invention will be described in detail below with reference to the drawings. It should be noted that the present invention is not limited by the following modes for carrying out the invention (hereinafter referred to as "embodiments"). In addition, the components in the following embodiments include those that can be readily conceived by those skilled in the art, those that are substantially identical, and those that come within the range of equivalence. Furthermore, the components disclosed in the following embodiments can be combined as appropriate. Numerical values include the rounding range.

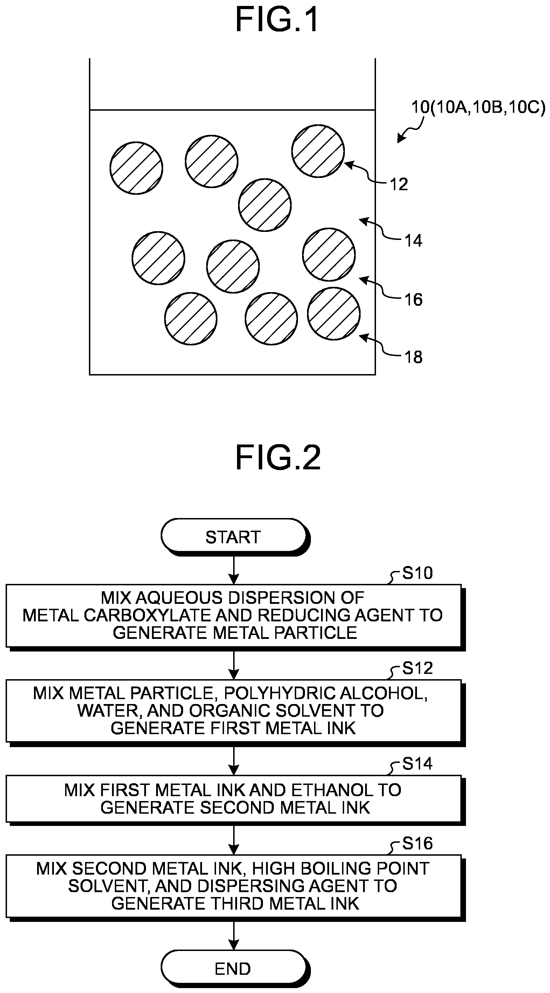

FIG. 1 is a schematic diagram of a metal ink according to the present embodiment. As illustrated in FIG. 1, a metal ink 10 contains metal particles 12, a polyhydric alcohol 14, a solvent 16, and an organic solvent 18. The metal ink 10 refers to an ink-like substance in which the metal particles 12 are not dissolved in the solvent 16, which is a liquid, but the metal particles 12 are present in the solid form in the solvent 16. In the metal ink 10, the metal particles 12 may settle in the solvent 16, or the metal particles 12 may be dispersed.

The metal ink 10 is used to form a metal layer on a member (for example, to form wiring). For example, the metal ink 10 is ejected from a nozzle onto a base material (a film of resin, metal or the like, or a substrate made of resin, metal, ceramic or a composite thereof) and dried, and thereafter further heated to sinter or melt the metal particles 12 while removing other components, and then cooled, whereby a metal layer formed of the metal component of the metal particles 12 is formed on the base material. However, the metal ink 10 is not limited to this application and may be used in any applications.

The metal layer may be produced from the metal ink 10 in any condition. It is preferable to heat the metal ink 10 under an oxidizing gas atmosphere, an inert gas atmosphere, or a reducing gas atmosphere.

### Metal Particles

The metal particles 12 are particles of metal. In the present embodiment, the metal particles 12 are preferably copper or silver particles and may include both copper and silver. In other words, the metal particles 12 are preferably particles of at least one of copper and silver.

The metal particle 12 preferably has a particle size (peak value of particle size distribution (number)) of 10 nm or more and 1000 nm or less. The particle size of the metal particle 12 in the metal ink 10 can be determined as the peak value of the particle size distribution (number) of the metal particle 12 using a particle size analyzer (Zetasizer Nano Series ZSP, manufactured by Malvern Panalytical Ltd.). In the measurement of the particle size distribution, when sufficient measurement quality cannot be obtained due to the high concentration of the metal particle 12 in the metal ink 10, the measurement may be performed after the particle is diluted and dispersed about 10 to 1000 times with a main solvent (water, ethanol, or high boiling point solvent) in the metal ink 10.

If the particle size is 10 nm or less, the specific surface area increases in inverse proportion to the particle size. As a result, the effect of surface oxidation may increase, and the sinterability of a coating film obtained using the metal particles 12 may deteriorate. On the other hand, if the particle size of the metal particles 12 is 1000 nm or more, the particle size becomes too large. As a result, the metal particles 12 may easily settle and separate in the ink when dispersed in the solvent. The particle size of the metal particles 12 is preferably in the range of 30 nm to 500 nm, and particularly preferably in the range of 30 nm to 300 nm.

The BET specific surface area of the metal particles 12 can be determined by measuring the amount of nitrogen gas adsorbed by the metal particles 12 using nitrogen or krypton gas as the measurement gas with a specific surface area measuring device (QUANTACHROME AUTOSORB-iQ2 available from Quantachrome Instruments). The BET specific surface area of the metal particles 12 is preferably in the range of 2.0 m²/g to 8.0 m²/g, more preferably in the range of 3.5 m²/g to 8.0 m²/g, and particularly preferably in the range of 4.0 m²/g to 8.0 m²/g. The shape of the metal particles 12 is not limited to a spherical shape and may be a needle-like or flat plate-like shape.

It is preferable that the surface of the metal particles 12 is partially or entirely coated with an organic substance. The coating of an organic substance suppresses oxidation of the metal particles 12 and further reduces the possibility of deterioration of sinterability due to oxidation of the metal particles 12. It can be said that the organic substance coating the metal particles 12 is not formed by the polyhydric alcohol 14 or the solvent 16 and is not derived from the polyhydric alcohol 14 or the solvent 16. It can also be said that the organic substance coating the metal particles 12 is not a metal oxide (copper oxide or silver oxide) formed by oxidation of the metal.

The coating of the metal particles 12 with an organic substance can be observed by analyzing the surface of the metal particles 12 using time-of-flight secondary ion mass spectrometry (TOF-SIMS). For example, when the metal particles 12 are copper, the ratio of the detected amount of C₃H₃O₃⁻ ions to the detected amount of Cu⁺ ions detected by analyzing the surface of the metal particles 12 using time-of-flight secondary ion mass spectrometry (C₃H₃O₃⁻/Cu⁺ ratio) is preferably 0.001 or more. The C₃H₃O₃⁻/Cu⁺ ratio is even more preferably in the range of 0.05 to 0.2. The surface of the metal particles 12 in this analysis refers to the surface of the metal particles 12 including the coating of the organic substance (that is, the surface of the organic substance), rather than the surface of the metal particles 12 when the organic substance is removed from the metal particles 12. When the metal particles 12 are silver, the ratio of the detected amount of C₃H₃O₃⁻ ions to the detected amount of Ag⁺ ions detected by analyzing the surface of the metal particles 12 using time-of-flight secondary ion mass spectrometry (C₃H₃O₃⁻/Ag⁺ ratio) is preferably 0.001 or more and even more preferably in the range of 0.05 to 0.2.

When the metal particles 12 are copper, C₃H₄O₂⁻ions or ions of C₅ or more may be detected by analyzing the surface using time-of-flight secondary ion mass spectrometry. The ratio of the detected amount of C₃H₄O₂⁻ions to the detected amount of Cu⁺ ions (C₃H₄O₂⁻/Cu⁺ ratio) is preferably 0.001 or more. The ratio of the detected amount of ions of C₅ or more to the detected amount of Cu⁺ ions (ions of C₅ or more/Cu ratio) is preferably less than 0.005. When the metal particles 12 are silver, the ratio of the detected amount of C₃H₄O₂⁻ ions to the detected amount of Ag⁺ ions (C₃H₄O₂⁻/Ag⁺ ratio) is preferably 0.001 or more. It can be said that the ratio of the detected amount of ions of C₅ or more to the detected amount of Ag⁺ ions (ions of C₅ or more/Ag⁺ ratio) is preferably less than 0.005.

The C₃H₃O₃⁻ ions, C₃H₄O₂⁻ ions, and ions of C₅ or more detected in time-of-flight secondary ion mass spectrometry originate from the organic substance coating the surface of the metal particles 12. Therefore, when the C₃H₃O₃⁻/Cu⁺ ratio and the C₃H₄O₂⁻/Cu⁺ ratio are each 0.001 or more, the surface of the metal particles 12 is less likely to oxidize and the metal particles 12 are less likely to agglomerate. Furthermore, when the C₃H₃O₃⁻/Cu⁺ ratio and the C₃H₄O₂⁻/Cu⁺ ratio are 0.2 or less, oxidation and agglomeration of the metal particles 12 can be suppressed without excessively reducing the sinterability of the metal particles 12, and the generation of decomposition gas of the organic substance during heating can also be suppressed. As a result, a bonding layer with fewer voids can be formed. In order to further improve the oxidation resistance of the metal particles 12 during storage and to further improve the sinterability at low temperatures, the C₃H₃O₃⁻/Cu⁺ ratio and the C₃H₄O₂⁻/Cu⁺ ratio are preferably in the range of 0.08 to 0.16. Furthermore, when the ions of C₅ or more/Cu⁺ ratio is 0.005 or more, a large amount of organic substance with a relatively high desorption temperature is present on the particle surface, and as a result, sinterability is not sufficiently developed and a strong bonding layer is less likely to be produced. The ions of C₅ or more/Cu⁺ ratio is preferably less than 0.003. When the metal particles 12 are silver, the C₃H₃O₃⁻/Ag⁺ ratio and the C₃H₄O₂⁻/Ag⁺ ratio are preferably in the range of 0.08 to 0.16. Furthermore, when the ions of C₅ or more/Ag⁺ ratio is 0.005 or more, a large amount of organic substance with a relatively high desorption temperature is present on the particle surface, and as a result, sinterability is not sufficiently developed and a strong bonding layer is less likely to be produced. It can be said that the ions of C₅ or more/Ag⁺ ratio is preferably less than 0.003.

The organic substance coating the metal particles 12 is preferably a carboxylic acid derived from a carboxylic acid metal used in the production of the metal particles 12. The method for producing the metal particles 12 coated with a carboxylic acid-derived organic substance will be described later. The amount of coating of the organic substance on the metal particles 12 is preferably in the range of 0.5% by mass to 2.0% by mass with respect to 100% by mass of the metal particles, more preferably in the range of 0.8% by mass to 1.8% by mass, and even more preferably in the range of 0.8% by mass to 1.5% by mass. With the amount of coating of the organic substance of 0.5% by mass or more, the metal particles 12 can be uniformly coated with the organic substance, and oxidation of the metal particles 12 can be suppressed more reliably. On the other hand, with the amount of coating of the organic substance of 2.0% by mass or less, it is possible to suppress the formation of voids in the sintered metal particles (bonding layer) due to gases generated by the decomposition of the organic substance by heating. The amount of coating of the organic substance can be measured using commercially available equipment. For example, the amount of coating can be measured using a thermogravimetry differential thermal analyzer TG8120-SL (Rigaku Corporation). In this case, for example, metal particles from which water has been removed by freeze-drying are used as a sample. Measurement is performed in nitrogen (Grade 2) gas to suppress oxidation of the metal particles, and the ratio of weight reduction by heating from 250°C to 300°C at a temperature increase rate of 10°C/min can be defined as the amount of coating of the organic substance. That is, the amount of coating = (sample weight after measurement)/(sample weight before measurement) × 100 (wt%). The measurement may be performed three times each with metal particles in the same lot, and the arithmetic mean may be considered as the amount of coating.

When the metal particles 12 are heated for 30 minutes at a temperature of 300°C in an inert gas atmosphere such as argon gas, it is preferable that 50% by mass or more of the organic substance is decomposed. The carboxylic acid-derived organic substance generates carbon dioxide gas, nitrogen gas, acetone evaporation gas, and water vapor during decomposition.

### Polyhydric Alcohol

The polyhydric alcohol 14 is a alcohol that contains two or more OH groups and is soluble in water and ethanol. Furthermore, it is preferable that the polyhydric alcohol 14 has a melting point of 30°C or more.

The polyhydric alcohol 14 may be, for example, at least one of 2,2-dimethyl-1,3-propanediol, 2,5-dimethyl-2,5-hexanediol, 2-hydroxymethyl-2-methyl-1,3-propanediol, 1-phenyl-1,2-ethanediol, 1,1,1-tris(hydroxymethyl)propane, erythritol, pentaerythritol, ribitol, resorcinol, (pyro)catechol, 5-methylresorcinol, pyrogallol, 1,2,3-cyclohexanetriol, and 1,3,5-cyclohexanetriol.

The polyhydric alcohol 14 is a non-electrolyte and is present in the metal ink 10 in a state of being dissolved in the solvent 16 (in a state in which molecules of the polyhydric alcohol 14 are dispersed in the solvent 16). However, the polyhydric alcohol 14 may be present in any form in the metal ink 10 and may be present in a state of not being dissolved in the solvent 16.

Since the polyhydric alcohol 14 is included in the metal ink 10, the polyhydric alcohol 14 coordinates around the metal particles 12 to properly suppress agglomeration of the metal particles 12. In other words, in the present embodiment, it can be said that it is preferable that the polyhydric alcohol 14 coordinates around the metal particles 12.

### Solvent

The solvent 16 is a liquid (medium) for dispersing the metal particles 12. The details of the solvent 16 will be described later.

### (Organic solvent)

The organic solvent 18 is an organic solvent that is a component different from the polyhydric alcohol 14 and the solvent 16. The organic solvent 18 is an organic solvent having a boiling point of 150°C or higher at atmospheric pressure and being miscible with water. The organic solvent 18 more preferably has a boiling point of 200°C or higher. The term "miscible" means that the organic solvent 18 can be mixed with water in any ratio (That is, they can be completely dissolved with each other at any concentration.). In the embodiment, the organic solvent 18 is preferably miscible with the solvent 16.

The organic solvent 18 is preferably a glycol ether or an aprotic polar solvent. Furthermore, the organic solvent 18 may include both a glycol ether and an aprotic polar solvent, in other words, preferably contains at least one of a glycol ether and an aprotic polar solvent.

Examples of the glycol ether included in the organic solvent 18 include diethylene glycol monomethyl ether, triethylene glycol monomethyl ether, polyethylene glycol monomethyl ether, diethylene glycol monoisopropyl ether, ethylene glycol monobutyl ether, diethylene glycol monobutyl ether, triethylene glycol monobutyl ether, ethylene glycol isobutyl ether, diethylene glycol monoisobutyl ether, ethylene glycol monoallyl ether, diethylene glycol monobenzyl ether, dipropylene glycol monomethyl ether, tripropylene glycol monomethyl ether, propylene glycol monopropyl ether, diethylene glycol dimethyl ether, triethylene glycol dimethyl ether, diethylene glycol methyl ethyl ether, and diethylene glycol diethyl ether. When the organic solvent 18 includes a glycol ether, at least one selected from the listed glycol ethers may be included.

Examples of the aprotic polar solvent included in the organic solvent 18 include N-methylpyrrolidone, dimethylformamide, 2-pyrrolidone, and propylene carbonate. When the organic solvent 18 includes an aprotic polar solvent, at least one selected from the listed aprotic polar solvents may be included.

### (Impurity)

The metal ink 10 may contain inevitable impurities in addition to the components described above. Examples of the inevitable impurities include a substance produced when the above-described component reacts by itself or with other components or oxygen or the like, by light, heat, or the like, through decomposition, polymerization, addition, oxidation, reduction, or the like.

### Metal Ink

The amount of polyhydric alcohol 14 in the metal ink 10 is preferably 0.01% or more and 20.0% or less, in mass ratio to the entire metal ink 10. The amount of polyhydric alcohol 14 in this range allows the metal particles 12 to be properly dispersed while preventing the concentration of the metal particles 12 from becoming too low.

The amount of metal particles 12 in the metal ink 10 is preferably 1.0% or more and 50.0% or less, more preferably 5.0% or more and 50.0% or less, and even more preferably 5.0% or more and 30.0% or less, in mass ratio to the entire metal ink 10. The amount of metal particles 12 in this range is advantageous from a manufacturing standpoint, for example, in that ejectability by nozzles is improved, because reduction in flowability of the metal ink 10 can be suppressed while keeping a sufficient concentration of metal particles 12.

The amount of solvent 16 in the metal ink 10 is preferably 50.0% or more and 99.0% or less, more preferably 50.0% or more and 95.0% or less, and even more preferably 60.0% or more and 95.0% or less, in mass ratio to the entire metal ink 10. The amount of solvent 16 in this range is advantageous from a manufacturing standpoint, for example, in that ejectability by nozzles is improved, because reduction in flowability of the metal ink 10 can be suppressed while keeping a sufficient concentration of metal particles 12.

In the metal ink 10, the content of the organic solvent 18 is preferably 0.01% or more and 30.0% or less, and more preferably 0.1% or more and 30.0% or less in mass ratio with respect to the entire metal ink 10. When the content of the organic solvent 18 falls within this range, the metal ink 10 has a sufficient antifungal property even when left for a long period of time, achieving appropriate storage for a long period of time.

The metal ink 10 may contain an ionized metal particle 12 (metal ions constituting the metal particle 12). That is, the ionized metal particle 12 may be contained in the liquid component of the metal ink 10. The ionized metal particle 12 may be at least one of a silver ion and a copper ion.

The metal ink 10 described above can have variations in composition of the solvent 16. The metal inks 10 with the solvents 16 of different compositions will be described below.

### First Metal Ink

One of the metal inks 10 with the solvents 16 of different compositions is denoted as a first metal ink 10A. In the first metal ink 10A, the solvent 16 is water. The first metal ink 10A is a mixture of metal particles 12 while the polyhydric alcohol 14 and the organic solvent 18 is dissolved in water as the solvent 16. In other words, the first metal ink 10A contains the metal particles 12 in an aqueous solution of polyhydric alcohol 14 and the organic solvent 18.

The amount of polyhydric alcohol 14 in the first metal ink 10A is preferably 0.01% or more and 20.0% or less, more preferably 0.5% or more and 20.0% or less, and even more preferably 1.0% or more and 20.0% or less, in mass ratio to the entire first metal ink 10A. The amount of polyhydric alcohol 14 in this range allows the metal particles 12 to be properly dispersed while preventing the concentration of the metal particles 12 from becoming too low.

The amount of metal particles 12 in the first metal ink 10A is preferably 1.0% or more and 50.0% or less, more preferably 5.0% or more and 50.0% or less, and even more preferably 5.0% or more and 30.0% or less, in mass ratio to the entire first metal ink 10A. The amount of metal particles 12 in this range is advantageous from a manufacturing standpoint, for example, in that ejectability by nozzles is improved, because reduction in flowability of the first metal ink 10A can be suppressed while keeping a sufficient concentration of metal particles 12.

In the first metal ink 10A, the content of the organic solvent 18 is preferably 0.01% or more and 30.0% or less, more preferably 1.0% or more and 30.0% or less, and still more preferably 2.0% or more and 30.0% or less in mass ratio with respect to the entire first metal ink 10A. When the content of the organic solvent 18 falls within this range, it is possible to achieve appropriate storage for a long period of time.

In the present embodiment, it is preferable that the first metal ink 10A contains no substances other than the metal particles 12, the polyhydric alcohol 14, the solvent 16 which is water, and the organic solvent 18, except for inevitable impurities. However, the present embodiment is not limited thereto and the first metal ink 10A may contain additives (dispersant, adhesion-applying agent, rheology adjuster, anti-rust agent, precipitation prevention agent,and the like) other than the metal particles 12, the polyhydric alcohol 14, the solvent 16 which is water, and the organic solvent 18.

### Second Metal Ink

One of the metal inks 10 with the solvents 16 of different compositions is denoted as a second metal ink 10B. The second metal ink 10B contains ethanol as the solvent 16. To be more specific, the main solvent which is the main component of the solvent 16 is ethanol. As used herein the main solvent refers to a content more than 50% in mass ratio in the entire solvent 16. The second metal ink 10B may contain, as the solvent 16, a solvent other than ethanol which is the main solvent, and in the present embodiment, may contain water. The second metal ink 10B is a mixture of metal particles 12 while the polyhydric alcohol 14 and the organic solvent 18 are dissolved in the solvent 16. In other words, for example, the second metal ink 10B contains the metal particles 12 in an aqueous solution of polyhydric alcohol 14, the organic solvent 18 and ethanol.

The amount of polyhydric alcohol 14 in the second metal ink 10B is preferably 0.01% or more and 10.0% or less, more preferably 0.1% or more and 10.0% or less, and even more preferably 0.1% or more and 5.0% or less, in mass ratio to the entire second metal ink 10B. The amount of polyhydric alcohol 14 in this range allows the metal particles 12 to be properly dispersed while preventing the concentration of the metal particles 12 from becoming too low.

The amount of metal particles 12 in the second metal ink 10B is preferably 1.0% or more and 50.0% or less, more preferably 5.0% or more and 50.0% or less, and even more preferably 5.0% or more and 30.0% or less, in mass ratio to the entire second metal ink 10B. The amount of metal particles 12 in this range is advantageous from a manufacturing standpoint, for example, in that ejectability by nozzles is improved, because reduction in flowability of the second metal ink 10B can be suppressed while keeping a sufficient concentration of metal particles 12.

The amount of ethanol in the second metal ink 10B is preferably more than 50.0% and 99.0% or less, more preferably more than 50.0% and 95.0% or less, and even more preferably 60.0% or more and 95.0% or less, in mass ratio to the entire second metal ink 10B. The amount of ethanol in this range is advantageous from a manufacturing standpoint, for example, in that ejectability by nozzles is improved, because reduction in flowability of the second metal ink 10B can be suppressed while keeping a sufficient concentration of metal particles 12.

In the second metal ink 10B, the content of the organic solvent 18 is preferably 0.01% or more and 30.0% or less, more preferably 0.1% or more and 20.0% or less, and still more preferably 0.5% or more and 20.0% or less in mass ratio with respect to the entire second metal ink 10B. When the content of the organic solvent 18 falls within this range, it is possible to achieve appropriate storage for a long period of time.

In the present embodiment, it is preferable that the second metal ink 10B contains no substances other than the metal particles 12, the polyhydric alcohol 14, the solvent 16 (herein water and ethanol), and the organic solvent 18, except for inevitable impurities. However, the present embodiment is not limited thereto and the second metal ink 10B may contain additives (dispersant, adhesion-applying agent, rheology adjuster, anti-rust agent, precipitation prevention agent and the like) other than the metal particles 12, the polyhydric alcohol 14, the solvent 16, and the organic solvent 18.

In a metal ink containing ethanol as the main solvent, ethanol may cause agglomeration of metal particles. In contrast, in the second metal ink 10B, since the polyhydric alcohol 14 is mixed, for example, the polyhydric alcohol 14 coordinates around the metal particles 12 to suppress agglomeration of the metal particles 12.

### Third Metal Ink

One of the metal inks 10 with the solvents 16 of different compositions is denoted as a third metal ink 10C. The third metal ink 10C contains a high-boiling solvent as the solvent 16. To be more specific, the main solvent which is the main component of the solvent 16 is a high-boiling solvent. For example, the third metal ink 10C contains the metal particles 12 while the polyhydric alcohol 14 and the organic solvent 18 is dissolved in the solvent 16. The third metal ink 10C may contain, as the solvent 16, a solvent other than a high-boiling solvent which is the main solvent. The third metal ink 10C may contain at least one of water and ethanol, and in the present embodiment contains both water and ethanol.

The solvent contains one or more OH groups, has a boiling point of 150°C or more, and is a liquid hardly soluble or insoluble in water. The high-boiling solvent hardly soluble or insoluble in water is preferably a solvent classified as a non-water-soluble liquid in the Cabinet Order on Regulation of Hazardous Materials in the Fire Service Act, Appendix 3. The high-boiling solvent is preferably an organic solvent, for example, at least one of α-terpineol and 2-ethyl-1,3-hexanediol. Both solvents may include isomers.

The amount of polyhydric alcohol 14 in the third metal ink 10C is preferably 0.01% or more and 5.0% or less, more preferably 0.01% or more and 5.0% or less, and even more preferably 0.01% or more and 3.0% or less, in mass ratio to the entire third metal ink 10C. The amount of polyhydric alcohol 14 in this range allows the metal particles 12 to be properly dispersed while preventing the concentration of the metal particles 12 from becoming too low.

The amount of metal particles 12 in the third metal ink 10C is preferably 1.0% or more and 50.0% or less, more preferably 5.0% or more and 50.0% or less, and even more preferably 5.0% or more and 30.0% or less, in mass ratio to the entire third metal ink 10C. The amount of metal particles 12 in this range is advantageous from a manufacturing standpoint, for example, in that ejectability by nozzles is improved, because reduction in flowability of the third metal ink 10C can be suppressed while keeping a sufficient concentration of metal particles 12.

The amount of high-boiling solvent in the third metal ink 10C is preferably more than 50.0% and 99.0% or less, more preferably more than 50.0% and 95.0% or less, and even more preferably 60.0% or more and 95.0% or less, in mass ratio to the entire third metal ink 10C. The amount of high-boiling solvent in this range is advantageous from a manufacturing standpoint, for example, in that ejectability by nozzles is improved, because reduction in flowability of the third metal ink 10C can be suppressed while keeping a sufficient concentration of metal particles 12.

In the third metal ink 10C, the content of the organic solvent 18 is preferably 0.01% or more and 30.0% or less, more preferably 0.01% or more and 10.0% or less, and still more preferably 0.1% or more and 10.0% or less in mass ratio with respect to the entire third metal ink 10C. When the content of the organic solvent 18 falls within this range, it is possible to achieve appropriate storage for a long period of time.

It is preferable that the third metal ink 10C contains a dispersant, which is a component other than the metal particles 12, the polyhydric alcohol 14, the solvent 16, and the organic solvent 18. Examples of the dispersant include cationic dispersants, anionic dispersants, nonionic dispersants, and amphoteric dispersants. Among those, examples of the anionic dispersants include carboxylic acid dispersants, sulfonic acid dispersants, phosphoric acid dispersants, and in particular, phosphate ester compounds are suitable as the phosphoric acid dispersants. The molecular weight of the phosphate ester compound used as a dispersant is preferably 200 or more and 2000 or less, more preferably 200 or more and 1500 or less, and even more preferably 200 or more and 1000 or less. The molecular weight of 200 or more provides sufficient hydrophobicity to achieve satisfactory dispersibility of metal particles in the high-boiling solvent. The molecular weight of 2000 or less enables decomposition and reaction at the targeted heating temperature (approximately 200 to 350°C) to eliminate the possibility of hindering sintering of the metal particles. Any phosphate ester compound can be used as a dispersant, and examples include polyoxyethylene alkyl ether phosphate esters such as laureth-n-phosphate, oleth-n-phosphate, steareth-n-phosphate (n = 2 to 10), and alkyl phosphate esters. One of these may be used or two or more may be used as a dispersant.

The amount of dispersant in the third metal ink 10C is preferably 0.01% or more and 5.0% or less, more preferably 0.1% or more and 5.0% or less, and even more preferably 0.1% or more and 3.0% or less, in mass ratio to the entire third metal ink 10C. The amount of dispersant in this range can properly suppress agglomeration of the metal particles 12.

In the present embodiment, it is preferable that the third metal ink 10C contains no substances other than the metal particles 12, the polyhydric alcohol 14, the solvent 16 (herein, water, ethanol, and high-boiling solvent), the organic solvent 18 and the dispersant, except for inevitable impurities. However, the present embodiment is not limited thereto. The third metal ink 10C does not necessarily contain a dispersant or may contain additives (adhesion-applying agent, rheology adjuster, anti-rust agent, precipitation prevention agent, and the like) other than the metal particles 12, the polyhydric alcohol 14, the solvent 16, the organic solvent 18 and the dispersant.

In a metal ink containing a high-boiling solvent as the main solvent, the high-boiling solvent may cause agglomeration of the metal particles 12. In contrast, in the third metal ink 10C, since the polyhydric alcohol 14 is mixed, for example, the polyhydric alcohol 14 coordinates around the metal particles 12 to suppress agglomeration of the metal particles 12.

### Method for Producing Metal Ink

A method for producing the metal ink 10 described above will now be described. FIG. 2 is a flowchart illustrating a method for producing a metal ink according to the present embodiment.

### Production of Metal Particles

As illustrated in FIG. 2, in this production method, the metal particles 12 are formed by mixing an aqueous carboxylic acid metal dispersion with a reducing agent (step S10). Specifically, first, an aqueous dispersion of a carboxylic acid metal (for example, copper carboxylate) is prepared, and then a pH adjuster is added to this aqueous carboxylic acid metal dispersion to adjust the pH to 2.0 or more and 7.5 or less. Subsequently, to this pH-adjusted aqueous carboxylic acid metal dispersion, a hydrazine compound in an amount 1.0 to 1.2 times the equivalent amount that can reduce metal ions is added as a reducing agent and mixed under an inert gas atmosphere. The resulting mixture is heated to a temperature of 60°C or more and 80°C or less and held for 1.5 hours or longer and 2.5 hours or shorter under an inert gas atmosphere. This process reduces the metal ions leached from the carboxylic acid metal to form metal particles 12 and forms a metal acid-derived organic substance on the surface of the metal particles 12. As the carboxylic acid, glycolic acid, citric acid, malic acid, maleic acid, malonic acid, fumaric acid, succinic acid, tartaric acid, oxalic acid, phthalic acid, benzoic acid, and salts thereof are used. As the reducing agent, a hydrazine compound is used, but hydrazine, ascorbic acid, oxalic acid, formic acid, and salts thereof may be used.

### Production of Metal Particles: Copper Particles

In the following, the method for producing metal particles 12 when the metal particles 12 are copper particles will be described. An aqueous dispersion of copper carboxylate can be prepared by adding a powdered carboxylic acid metal to pure water such as distilled water or ion-exchanged water at a concentration of 25% by mass or more and 40% by mass or less, stirring with a stirring blade, and dispersing uniformly. Examples of the pH adjuster include triammonium citrate, ammonium hydrogen citrate, and citric acid. Among these, triammonium citrate is preferred because it can mildly adjust the pH. The pH of the aqueous copper carboxylate dispersion is set to 2.0 or more in order to accelerate the leaching rate of copper ions leached from copper carboxylate and to allow the formation of copper particles to proceed quickly to obtain the target fine copper particles. The pH is set to 7.5 or less in order to prevent the leached metal ions from becoming copper(II) hydroxide and to increase the yield of copper particles. Setting the pH to 7.5 or less can prevent the reducing power of the hydrazine compound from becoming excessively high and facilitates formation of the target copper particles. The pH of the aqueous copper carboxylate dispersion is preferably adjusted to within a range of 4 to 6.

The reduction of copper carboxylate by the hydrazine compound is performed under an inert gas atmosphere. This is to prevent oxidation of copper ions leached into the liquid. Examples of the inert gas include nitrogen gas and argon gas. The hydrazine compound has the advantages of producing no residue after the reduction reaction when reducing copper carboxylate under acidic conditions, being relatively safe, and being easy to handle. Examples of the hydrazine compound include hydrazine monohydrate, anhydrous hydrazine, hydrazine hydrochloride, and hydrazine sulfate. Among these hydrazine compounds, hydrazine monohydrate and anhydrous hydrazine, which do not contain components such as sulfur and chlorine that can be impurities, are preferred.

Generally, copper formed in an acidic solution of less than pH 7 will dissolve. In the present embodiment, however, the hydrazine compound as a reducing agent is added and mixed with an acidic solution of less than pH 7 to form copper particles in the resulting mixture. Thus, the carboxylic acid-derived component generated from copper carboxylate quickly coats the surface of the copper particles to suppress dissolution of the copper particles. It is preferable that the aqueous dispersion of copper carboxylate after the pH adjustment is set to 50°C or more and 70°C or less to facilitate the progress of the reduction reaction.

The mixture of the hydrazine compound is heated to a temperature of 60°C or more and 80°C or less and held for 1.5 hours or longer and 2.5 hours or shorter under an inert gas atmosphere in order to form copper particles and to form a coating of an organic substance on the surface of the formed copper particles. Heating and holding in an inert gas atmosphere is to prevent oxidation of the formed copper particles. The starting material, that is, copper carboxylate, usually contains approximately 35% by mass of copper. By adding a hydrazine compound as a reducing agent to an aqueous carboxylic acid dispersion containing a copper component in such a degree, heating the mixture to the above temperatures, and holding the mixture for the above period of time, the formation of copper particles and the formation of an organic substance on the surface of the copper particles proceed in a balanced manner, resulting in copper particles with the amount of coating of the organic substance in the range of 0.5% by mass to 2.0% by mass with respect to 100% by mass of the copper particles. If the heating temperature is less than 60°C and the holding time is shorter than 1.5 hours, the carboxylic acid metal may not be completely reduced, and the rate of copper particle formation may be too slow. As a result, the amount of organic substance coating the copper particles may be excessive. On the other hand, if the heating temperature exceeds 80°C and the holding time exceeds 2.5 hours, the rate of copper particle formation may be too fast, and the amount of organic substance coating the copper particles may be too small. The preferred heating temperature is 65°C or more and 75°C or less, and the preferred holding time is 2 hours or longer and 2.5 hours or shorter.

The copper particles produced in the mixture may be washed, desalted, etc. using pure water or the like from the mixed liquid in an inert gas atmosphere. Furthermore, it is possible to obtain an water slurry containing the metal particles 12 with a certain solid-liquid ratio (for example, solid-liquid ratio: 50/50 [% by mass]) by dehydration using, for example, a centrifugal separator. In some cases, the copper particles having the surface coated with an organic substance can be obtained by solid-liquid separation and drying by freeze-drying or drying under reduced pressure. These copper particles have the surface coated with an organic substance and therefore is less likely to be oxidized even when stored in air.

### Production of Metal Particles: Silver Particles

The method for producing metal particles 12 when the metal particles 12 are silver particles will now be described.

First, a silver carboxylate slurry is prepared by simultaneously adding an aqueous silver salt solution and an aqueous carboxylate solution dropwise into water.

When a silver carboxylate slurry is prepared, it is preferable that each of the aqueous silver salt solution, the aqueous carboxylate solution, water, and the silver carboxylate slurry is held at a predetermined temperature in the range of 20 to 90°C. Holding the temperature of each liquid at a predetermined temperature of 20°C or more facilitates formation of silver carboxylate and can increase the particle size of silver particles. Furthermore, holding the temperature of each liquid at a predetermined temperature of 90°C or less can prevent the silver particles from becoming coarse particles. Furthermore, it is preferable that water is stirred while the aqueous silver salt solution and the aqueous carboxylate solution are simultaneously added dropwise into the water.

As a silver salt in the aqueous silver salt solution, specifically, for example, one or two or more compounds selected from the group consisting of silver nitrate, silver chlorate, silver phosphate, and salts thereof are preferred.

As a carboxylic acid in the aqueous carboxylate solution, one or two or more compounds selected from the group consisting of glycolic acid, citric acid, malic acid, maleic acid, malonic acid, fumaric acid, succinic acid, tartaric acid, and salts thereof are preferred.

Examples of the water include ion-exchanged water and distilled water. It is particularly preferred to use ion-exchanged water because it does not contain ions that may adversely affect synthesis and its production cost is lower than that of distilled water.

Subsequently, a silver particle slurry is prepared by adding an aqueous reducing agent solution dropwise into the silver carboxylate slurry and then performing predetermined heat treatment. Herein, specifically, the predetermined heat treatment may be, for example, heat treatment of increasing the temperature to a predetermined temperature (maximum temperature) in the range of 20 to 90°C at a temperature increase rate of 15°C/hour or less in water, holding this maximum temperature for 1 to 5 hours, and then decreasing the temperature to 30°C or less over 30 minutes or shorter.

In the above predetermined heat treatment, setting the temperature increase rate to 15°C/hour or less can prevent the silver particles from becoming coarse particles.

Furthermore, in the above predetermined heat treatment, setting the maximum temperature to 20°C or more facilitates reduction of silver carboxylate and can increase the particle size of silver particles. On the other hand, setting the maximum temperature to 90°C or less can prevent silver particles from becoming coarse particles.

Furthermore, in the above predetermined heat treatment, setting the holding time at the maximum temperature to 1 hour or longer facilitates reduction of silver carboxylate and can increase the particle size of silver particles. On the other hand, setting the holding time to 5 hours or shorter can prevent silver particles from becoming coarse particles.

Furthermore, in the above predetermined heat treatment, setting the period of time for decreasing the temperature to 30°C to 30 minutes or shorter can prevent the silver particles from becoming coarse particles.

When a silver particle slurry is prepared, it is preferable to hold the temperature of each of the silver carboxylate slurry and the aqueous reducing agent solution at a predetermined temperature in the range of 20 to 90°C. Holding the temperature of each liquid at a predetermined temperature of 20°C or more facilitates reduction of silver carboxylate and can increase the particle size of silver powder. On the other hand, holding the temperature of each liquid at a predetermined temperature of 90°C or less can prevent the silver powder from becoming coarse particles.

As a reducing agent in the aqueous reducing agent solution, one or two or more compounds selected from the group consisting of hydrazine, ascorbic acid, oxalic acid, formic acid, and salts thereof are preferred.

Herein, a water slurry containing silver particles with a certain solid-liquid ratio (for example, solid-liquid ratio: 50/50 [% by mass]) can be obtained by subjecting the silver particle slurry to a centrifuge to remove the liquid layer in the silver powder slurry, and dehydrate and desalinate the silver particle slurry.

In some cases, the silver particle slurry can be dried to obtain silver particles. The silver particle slurry can be dried by any method, and specific examples of the drying method include freeze-drying, drying under reduced pressure, and heat drying. The freeze-drying is a method in which the silver particle slurry is frozen in a sealed container, the inside of the sealed container is depressurized by a vacuum pump to lower the boiling point of the material to be dried, and the material to be dried is sublimated and dried at a low temperature. The drying under reduced pressure is a method in which the material to be dried is dried under reduced pressure. The heat drying is a method in which the material to be dried is dried by heating.

### (Production of first metal ink)

Next, the metal particle 12, the polyhydric alcohol 14, the organic solvent 18, and water as the solvent 16 are mixed to generate a first metal ink 10A (step S12). Here, the first metal ink 10A is preferably produced by mixing the metal particle 12, the polyhydric alcohol 14, the organic solvent 18, and water so that the content of the metal particle 12, the polyhydric alcohol 14, and the organic solvent 18 falls within the numerical ranges described above. The metal particle 12, the polyhydric alcohol 14, the organic solvent 18, and water may be mixed by an arbitrary method. For example, an aqueous solution containing the polyhydric alcohol 14 and the organic solvent 18 may be mixed, or an aqueous solution of the polyhydric alcohol 14 and an aqueous solution of the organic solvent 18 may be mixed, with a water slurry containing the metal particle 12 or an aqueous solution containing the polyhydric alcohol 14 and the organic solvent 18 may be mixed, or an aqueous solution of the polyhydric alcohol 14 and an aqueous solution of the organic solvent 18 may be mixed, with the metal particle 12 not containing water. In addition, if necessary, in order to remove foreign matters and aggregated particles of the metal particle 12, filtration may be performed with a filter having a predetermined opening, or the like. Such filtration may be performed at any stage in the subsequent metal ink-producing process.

### Production of Second Metal Ink

Subsequently, the first metal ink 10A is mixed with ethanol as the solvent 16 to generate the second metal ink 10B (step S14). Herein, it is preferable that the second metal ink 10B is produced by mixing the first metal ink 10A with ethanol and water such that the amounts of metal particles 12, polyhydric alcohol 14, ethanol, and organic solvent 18 are in the numerical ranges described above. The first metal ink 10A, ethanol and water may be mixed by any method. For example, the first metal ink 10A obtained at step S12 may be allowed to stand still for a predetermined period of time (for example, about 1 day) or centrifuged under predetermined conditions, then some of the supernatant may be removed, and ethanol may be added to the first metal ink 10A from which the supernatant has been removed.

### Production of Third Metal Ink

Subsequently, the second metal ink 10B is mixed with a high-boiling solvent as the solvent 16 and a dispersant to generate the third metal ink 10C (step S16). Herein, it is preferable that the third metal ink 10C is produced by mixing the second metal ink 10B, a high-boiling solvent, a dispersant, and an organic solvent 18 such that the amounts of metal particles 12, polyhydric alcohol 14, high-boiling solvent, and dispersant are in the numerical ranges described above. The second metal ink 10B, the high-boiling solvent, and the dispersant may be mixed by any method. For example, the second metal ink 10B obtained at step S14 may be allowed to stand still for a predetermined period of time (for example, about 1 day) or centrifuged under predetermined conditions, then some of the supernatant may be removed, and the high-boiling solvent may be added to the second metal ink 10B from which the supernatant solution has been removed. The addition of a dispersant is not essential.

The solvent (water, ethanol, high-boiling solvent, etc.) and the organic solvent 18 may be further removed from or added to the third metal ink 10C to achieve the numerical ranges described above.

The third metal ink 10C thus generated is used as the metal ink 10. In the description above, the second metal ink 10B is generated using the first metal ink 10A, and the third metal ink 10C is generated using the second metal ink 10C. In other words, the first metal ink 10A and the second metal ink 10B are intermediate substances for producing the third metal ink 10C. However, the first metal ink 10A and the second metal ink 10B are not necessarily intermediate substances, and the first metal ink 10A and the second metal ink 10B themselves may be used as the metal ink 10.

The method for producing the metal particles 12 and the metal ink 10 described above are by way of example, and the metal particles 12 and the metal ink 10 may be produced by any method.

### (Effects)

As described above, the metal ink 10 according to the embodiment contains the metal particle 12, the solvent 16, the organic solvent 18 having a boiling point of 150°C or higher at atmospheric pressure and being miscible with water, and the polyhydric alcohol 14 having two or more OH groups and being soluble in water and ethanol. Here, in a metal ink in which a metal particle is dispersed in a solvent, the metal particles may aggregate. When the metal particles are aggregated, the property of the product may be deteriorated. For example, the metal layer has a decreased denseness. On the other hand, since the metal ink 10 according to the embodiment contains the polyhydric alcohol 14, the polyhydric alcohol 14 can suppress the aggregation of the metal particles 12. The metal ink 10 of the embodiment can suppress the aggregation of the metal particles 12, thereby suppressing the deterioration of the characteristics of the product. Furthermore, for example, when the metal ink 10 is ejected with a nozzle, the aggregation of the metal particles 12 is suppressed, and defects in production such as clogging in the nozzle can also be suppressed. Furthermore, the metal ink 10 according to the embodiment, containing the organic solvent 18, has a sufficient antifungal property even when left for a long period of time, achieving appropriate storage for a long period of time.

It is preferable that the metal particle 12 is copper or silver, the solvent 16 includes water, the organic solvent 18 includes at least one of a glycol ether and an aprotic polar solvent, and the polyhydric alcohol 14 includes at least one polyhydric alcohol that has two or more OH groups, is soluble in water and ethanol, and has a melting point of 30°C or higher. The metal ink 10, having such components, can suppress the aggregation of the metal particles 12, achieving appropriate storage for a long period of time.

As for the method for producing the metal ink 10 according to the embodiment, the metal particle 12, the solvent 16, the organic solvent 18 having a boiling point of 150°C or higher at atmospheric pressure and being miscible with water, and the polyhydric alcohol 14 having two or more OH groups and being soluble in water and ethanol are mixed to produce the metal ink 10 containing the metal particle 12, the solvent 16, the polyhydric alcohol 14, and the organic solvent 18. According to the production method, the added polyhydric alcohol 14 can suppress the aggregation of the metal particles 12, and the added organic solvent 18 achieves appropriate storage for a long period of time.

### Examples

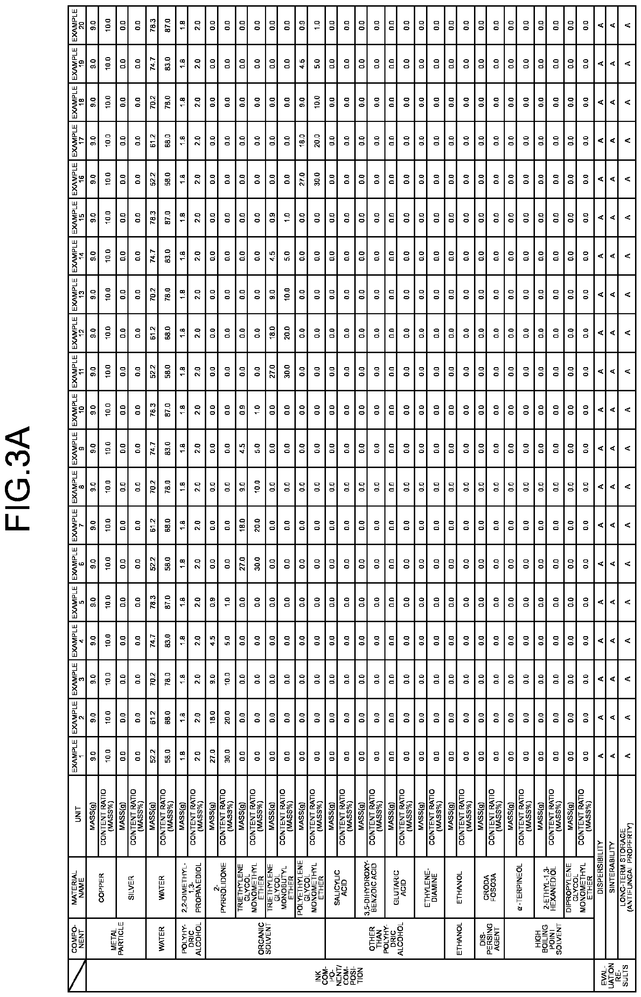

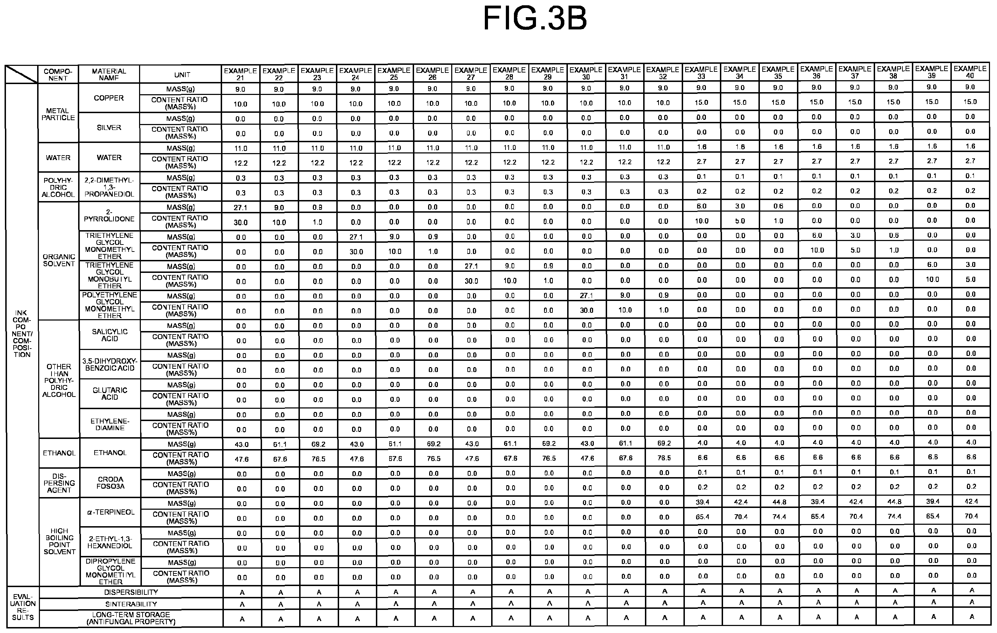

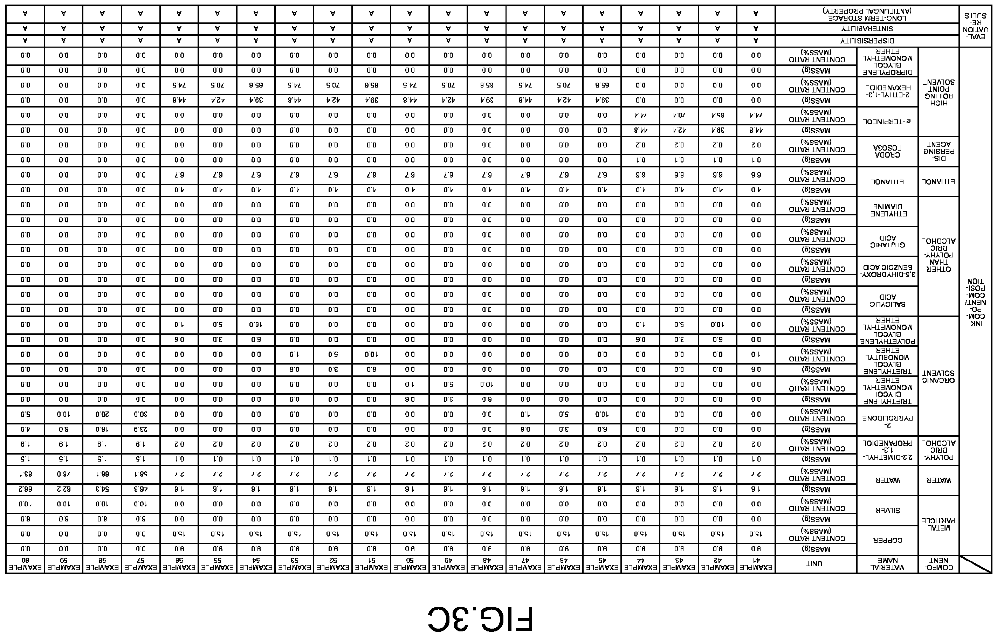

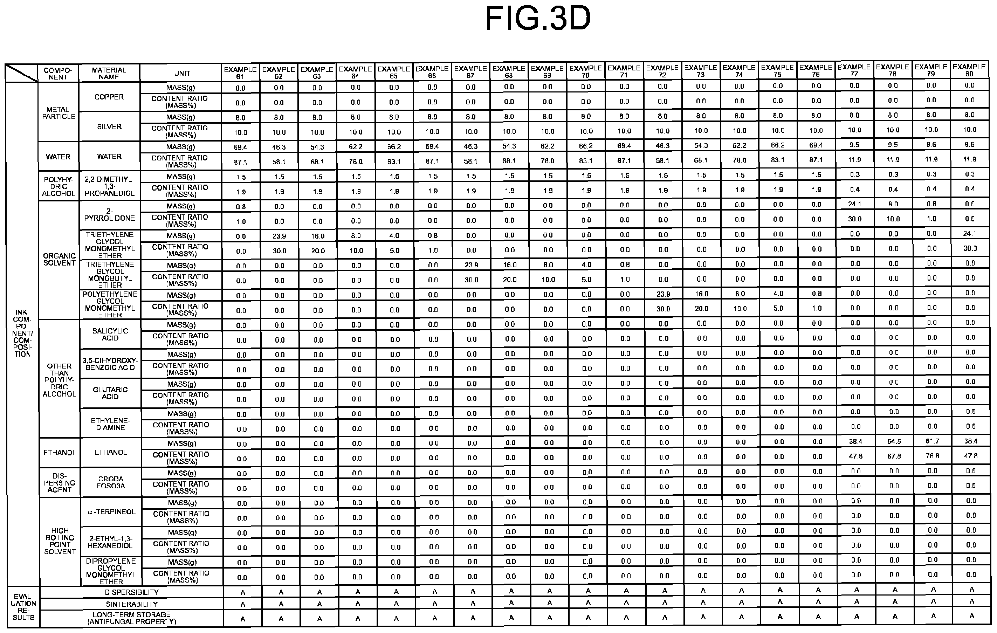

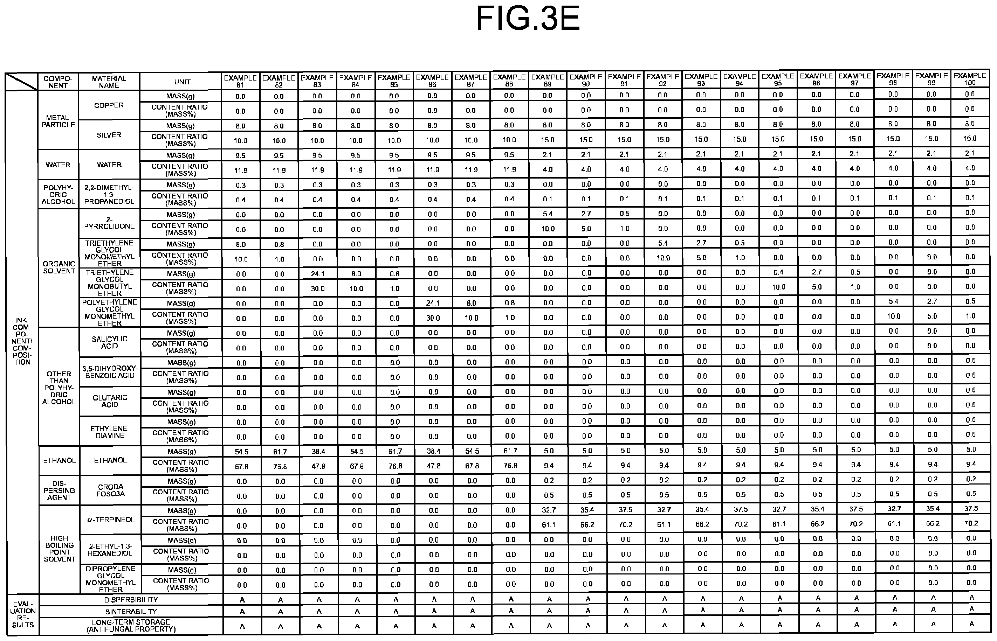

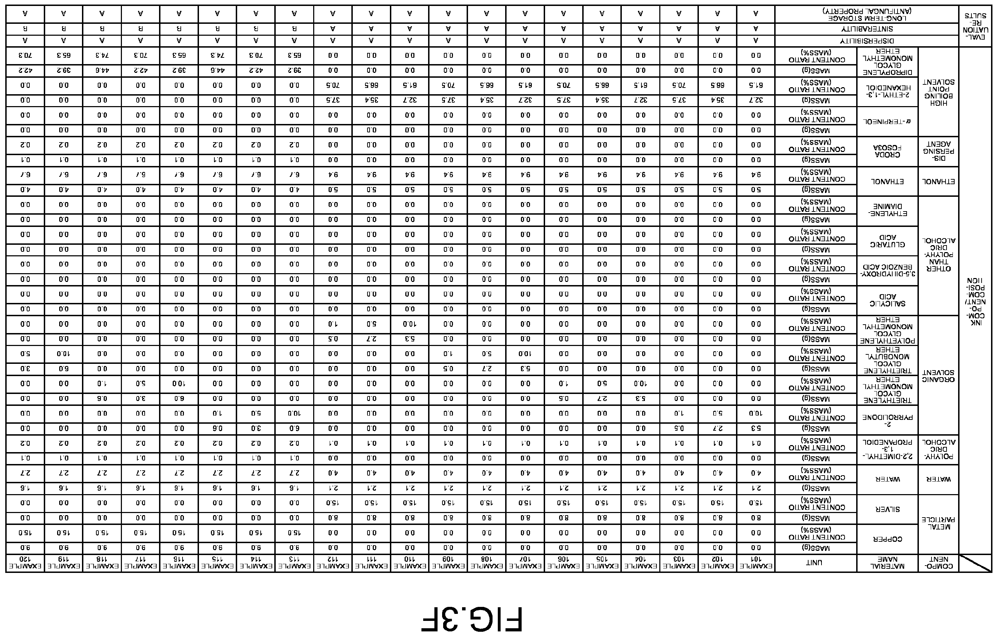

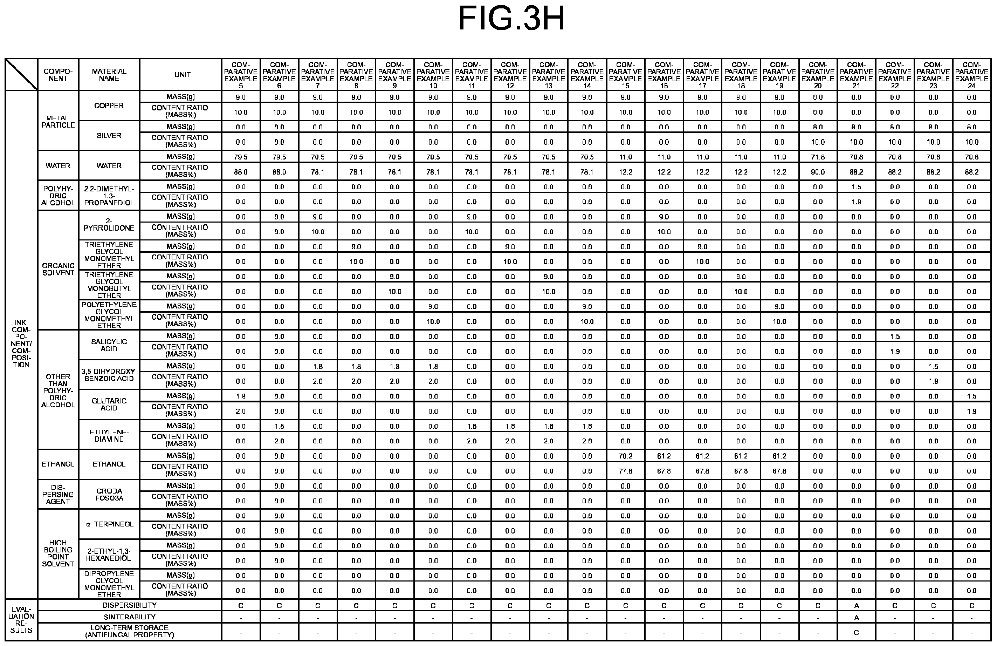

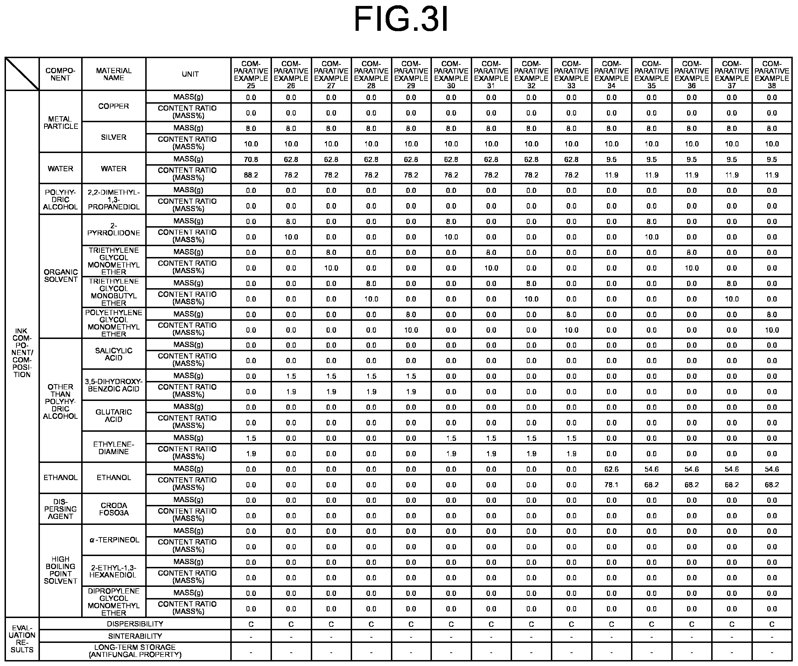

Examples will now be described. FIG. 3A to FIG. 3I list the amounts of components of the metal inks and the evaluation results in examples.

### Example 1

In Example 1, copper phthalate was prepared as copper carboxylate as a starting material. Copper phthalate was put into ion-exchanged water at room temperature and stirred using a stirring blade to prepare an aqueous dispersion of copper phthalate with a concentration of 30% by mass. Then, an aqueous solution of ammonium phthalate was added as a pH adjuster to this aqueous solution of copper phthalate to adjust the pH of the above aqueous dispersion to 3. Subsequently, the pH-adjusted solution was set to 50°C, and under a nitrogen gas atmosphere, an aqueous solution of hydrazine monohydrate (2-fold dilution) with an oxidation-reduction potential of -0.5 V was added as a reducing agent in an amount 1.2 times the equivalent amount that can reduce copper ions to the pH-adjusted solution at once and mixed homogeneously using a stirring blade. Then, in order to synthesize the target copper particles (metal particles), the mixture of the aqueous dispersion and the reducing agent is heated to a holding temperature of 70°C under a nitrogen gas atmosphere and held at 70°C for 2 hours. Then, a water slurry of copper particles (copper powder concentration: 50% by mass) was obtained by dehydration and desalination using a centrifuge.

18 g of the obtained water slurry of the copper particle (metal particle) (copper powder concentration: 50 mass%), 36 g of an aqueous solution of 2.2-dimethyl-1,3-propanediol as a polyhydric alcohol (concentration: 5 mass%), and 18 g of water were mixed, and 18 g of 2-pyrrolidone was further added as an organic solvent to obtain 90 g of a copper ink (metal ink) having water as the main solvent. The content ratio of each component in the copper ink of Example 1 was as shown in FIG. 3A. The copper ink in Example 1 is an example of the first metal ink 10A of the embodiment.

### (Examples 2 to 136)

In Examples 2 to 136, the added components were changed as shown in FIGS. 3A to 3G from Example 1 to produce metal inks. In the components in FIGS. 3A to 3G, a substance having a content ratio value of "0.0" indicates that the substance is not contained.

The metal ink in each of Examples 1 to 136 contains a metal particle (at least one of copper and silver), a solvent (at least one of water, ethanol, and a high boiling point solvent), an organic solvent having a boiling point of 150°C or higher at atmospheric pressure and being miscible with water, and a polyhydric alcohol having two or more OH groups and being soluble in water and ethanol.

The metal ink in each of Examples 21 to 56 and 77 to 136 contains ethanol as a solvent.

The metal ink in each of Examples 33 to 56 and 89 to 136 contains, as a solvent, a high boiling point solvent that has one or more OH groups, has a boiling point of 150°C or higher, and is a liquid hardly soluble or insoluble in water. Dipropylene glycol monomethyl ether, which is a high boiling point solvent contained in the metal inks in Examples 57 to 64, has one or more OH groups and has a boiling point of 150°C or higher, but does not satisfy the condition of being hardly soluble or insoluble in water. The phrase "does not satisfy the condition of being hardly soluble or insoluble in water" means that a solvent is not classified as the water-insoluble liquid in Appended Table 3 in the Cabinet Order Concerning the Control of Hazardous Materials in the Fire Service Act.

### (Comparative Examples 1 to 38)

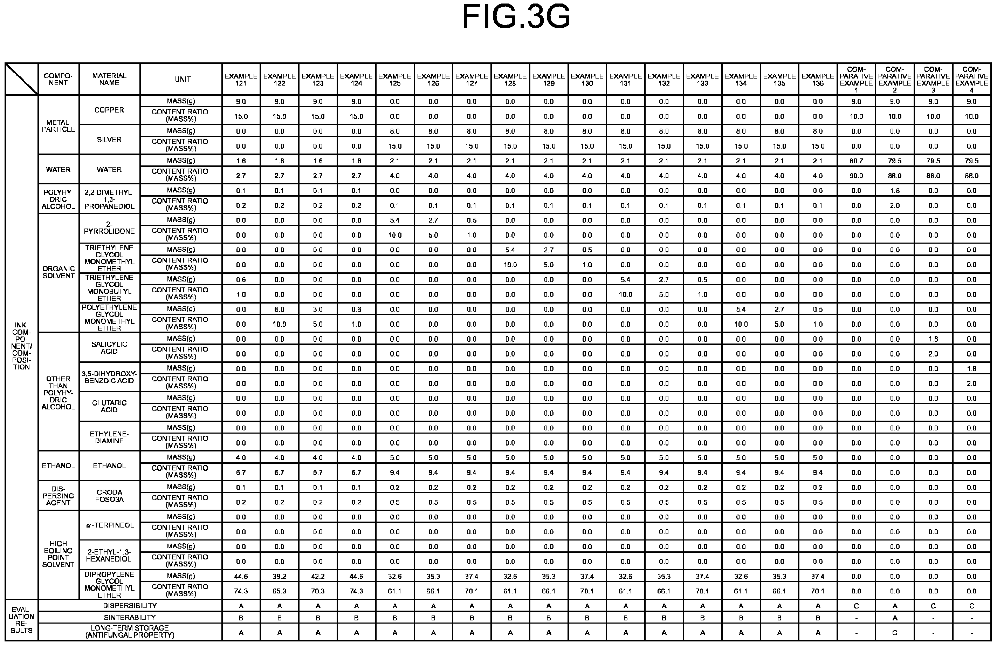

In Comparative Examples 1 to 38, the added components were changed as shown in FIGS. 3G to 3I from Comparative Example 1 to produce metal inks. Comparative Examples 1 to 38 do not contain at least one of an organic solvent and a polyhydric alcohol. In the components in FIGS. 3G to 3I, a substance having a content ratio value of "0.0" indicates that the substance is not contained.

### (Evaluation method)

The dispersibility of the metal inks obtained in Examples and Comparative Examples was evaluated. The obtained metal ink was sufficiently dispersed in an ultrasonic cleaner or the like. Then, 10 g of the metal ink was collected in a 20 ml glass sample container, and left in a refrigerator overnight. After standing overnight, the interface of sedimentation and separation of the metal particles in the metal ink was evaluated such that, when the height from the bottom of the sample container to the liquid surface of the metal ink was 100, 50 or higher was rated as excellent "A", and less than 50 was rated as poor "C" in the height from the bottom of the container.

The long-term storage of the metal inks obtained in Examples and Comparative Examples was evaluated. The metal ink having a dispersibility of "A" was evaluated for antifungal property (mold resistance test) in accordance with the method of "6. Testing methods for paints" described in Japanese Industrial Standards (JIS Z 2911). At this time, instead of the test piece, the metal ink as a sample was placed in a hollow with a diameter of 30 mm at the center of the medium, and subjected to the test. A sample in which mycelial growth was not observed was rated as excellent "A", and a sample in which mycelial growth was observed was rated as poor "C".

Further, the metal ink having a dispersibility of "A" in Example was applied and dried to have a size of 10 mm × 10 mm with an inkjet device on the central portion of a polyimide film having a thickness of 100 µm and a size of 50 mm × 50 mm. Thereafter, the metal ink was heated at 200°C for 30 seconds in a nitrogen atmosphere to obtain a fired film of the metal ink having a thickness of about 1 to 3 µm. The sinterability was evaluated by SEM observation of the cross section of the obtained fired film. In the cross-sectional SEM image, the sinterability was rated as excellent "A" when the ratio of voids in the film was 20% or less, was rated as good "B" when the ratio was more than 20% and 30% or less, and was rated as poor "C" when the ratio was more than 30%.

### (Evaluation results)

As the evaluation, dispersibility, sinterability, and long-term storage were evaluated. All of Examples 1 to 112, each of which contains, in addition to a metal particle and a solvent, a polyhydric alcohol having two or more OH groups and being soluble in water and ethanol and an organic solvent having a boiling point of 150°C or higher at atmospheric pressure and being miscible with water, were rated as "A" in all of dispersibility, sinterability, and long-term storage. Therefore, it is understood that the metal inks achieve suppressing aggregation of the metal particles, sintering, and appropriate storage for a long period of time. Examples 113 to 136, each of which uses a high boiling point solvent that is not a solvent having one or more OH groups, having a boiling point of 150°C or higher, and being a liquid hardly soluble or insoluble in water, were rated as "A" in dispersibility and long-term storage and slightly deteriorated and rated as "B" in sinterability, but did not include a rating of "C". Therefore, it is understood that the metal inks achieve suppressing aggregation of the metal particles, sintering, and appropriate storage for a long period of time. On the other hand, Comparative Examples 1 to 38, each of which does not contain at least one of a polyhydric alcohol and an organic solvent, were rated as "C" in at least one of dispersibility, sinterability, and long-term storage. Therefore, it is understood that the metal inks fail to satisfy all of suppressing aggregation of the metal particles, sintering, and storage for a long period of time. Comparative Example 2 and Comparative Example 21, containing a polyhydric alcohol and not containing an organic solvent, were rated as "A" in dispersibility and sinterability, but rated as "C" in long-term storage. Comparative examples rated as "C" in dispersibility were difficult to use as an ink, and the sinterability and long-term storage were not evaluated, and therefore indicated as "-".

Although the embodiments of the present invention have been described above, embodiments are not limited by the contents of these embodiments. The aforementioned components include those that can be readily conceived by those skilled in the art, those that are substantially identical, and those that come within the range of equivalence. Furthermore, the aforementioned components can be combined as appropriate. Furthermore, various omissions, substitutions, or modifications of the components can be made without departing from the spirit of the foregoing embodiments.

### Reference Signs List

- 10: Metal ink
- 12: Metal particle
- 14: Polyhydric alcohol
- 16: Solvent
- 18: Organic solvent

## Claims

1. A metal ink comprising:
a metal particle;
a solvent;
an organic solvent having a boiling point of 150°C or higher at atmospheric pressure and being miscible with water; and
a polyhydric alcohol having two or more OH groups and being soluble in water and ethanol.

2. The metal ink according to claim 1, wherein the polyhydric alcohol is contained in a mass ratio of 0.01% or more and 20.0% or less with respect to a total amount of the metal ink.

3. The metal ink according to claim 1 or 2, wherein the metal particle is contained in a mass ratio of 1.0% or more and 50.0% or less with respect to a total amount of the metal ink.

4. The metal ink according to any one of claims 1 to 3, wherein the organic solvent is contained in a mass ratio of 0.01% or more and 30.0% or less with respect to a total amount of the metal ink.

5. The metal ink according to any one of claims 1 to 4, wherein the organic solvent includes at least one of a glycol ether and an aprotic polar solvent.

6. The metal ink according to any one of claims 1 to 5, wherein the polyhydric alcohol has a melting point of 30°C or higher.

7. The metal ink according to any one of claims 1 to 6, wherein the solvent includes water.

8. The metal ink according to any one of claims 1 to 7, wherein the solvent includes ethanol.

9. The metal ink according to any one of claims 1 to 8, wherein the solvent includes a high boiling point solvent that has one or more OH groups, has a boiling point of 150°C or higher, and is a liquid hardly soluble or insoluble in water.

10. The metal ink according to any one of claims 1 to 9, wherein the metal particle is at least one of copper and silver.

11. The metal ink according to any one of claims 1 to 10, wherein the metal particle is copper or silver, the solvent includes water, the organic solvent includes at least one of a glycol ether and an aprotic polar solvent, and the polyhydric alcohol includes at least one polyhydric alcohol that has two or more OH groups, is soluble in water and ethanol, and has a melting point of 30°C or higher.

12. A method for producing a metal ink, the method comprising
mixing a metal particle, a solvent, an organic solvent having a boiling point of 150°C or higher at atmospheric pressure and being miscible with water, and a polyhydric alcohol having two or more OH groups and being soluble in water and ethanol to produce a metal ink containing the metal particle, the solvent, and the polyhydric alcohol.

13. The method for producing a metal ink according to claim 12, comprising mixing the metal particle, water as the solvent, the polyhydric alcohol, and the organic solvent to produce a first metal ink which is a metal ink containing the metal particle, water, the organic solvent, and the polyhydric alcohol.

14. The method for producing a metal ink according to claim 13, comprising mixing the first metal ink, and ethanol as the solvent to produce a second metal ink which is a metal ink containing the metal particle, water, the ethanol, the polyhydric alcohol, and the organic solvent.

15. The method for producing a metal ink according to claim 14, comprising mixing the second metal ink, and a high boiling point solvent, the high boiling point solvent as the solvent has one or more OH groups, has a boiling point of 150°C or higher, and is a liquid hardly soluble or insoluble in water to produce a third metal ink which is a metal ink containing the metal particle, water, the ethanol, the high boiling point solvent, the polyhydric alcohol, and the organic solvent.

16. A method for producing a metal layer, the method comprising
heating the metal ink according to any one of claims 1 to 11 to form a metal layer.

17. A metal layer formed by using the metal ink according to any one of claims 1 to 11.
